# FASCICULE DE BREVET EUROPEEN

(11) **EP 0 761 355 B1**
(45) Date de publication et mention de la délivrance du brevet: **03.04.2002**
(21) Numéro de dépôt: 96810558.5
(22) Date de dépôt: 22.08.1996
(51) Int. Cl.: B23D 51/14, B23D 51/02, B23D 51/01, B23D 49/11

(54) **Porte-scie**
Handsäge mit Sägeblatthaltevorrichtung
Hand saw with saw blade holder assembly

(30) Priorité: 11.09.1995 CH 256595
(43) Date de publication de la demande: 12.03.1997
(73) Titulaire: Scies Miniatures SA, 1337 Vallorbe (CH)
(72) Inventeur: Favre, Roger, 1337 Vallorbe (CH)
(74) Mandataire: Kiliaridis, Constantin

(56) Documents cités:
- DE-A- 3 248 584
- FR-A- 961 033
- FR-A- 1 255 653
- GB-A- 984 747
- US-A- 2 183 669

## Description

La présente invention concerne un porte-scie comprenant un archet en forme de U, une poignée et deux dispositifs de fixation de deux extrémités de la scie selon le préambule de la revendication 1; voir FR-A 961 033.

Il est connu d'utiliser de tels dispositifs pour fixer des lames plates de faible largeur ou filiformes des scies utilisées pour scier différents matériaux. Habituellement, la lame ou le fil est fixée par ses deux extrémités entre deux mâchoires solidaires de deux extrémités de l'archet. Les mâchoires sont principalement constituées, d'une part, par une partie fixe solidaire de chacune des extrémités de l'archet et, d'autre part, par une deuxième partie mobile qui est une plaquette à travers laquelle une vis vient se visser sur la partie fixe. En tournant dans un sens la vis, on obtient le serrage de la plaquette mobile sur la surface plane et partant la fixation de la lame.

Cette manière de faire utilisée depuis des décennies présente l'inconvénient d'une fixation aléatoire et d'un positionnement imprécis et souvent lors d'un tel serrage, la scie se vrille ou lors de l'effort du sciage, elle se déforme.

La présente invention a pour but de proposer un porte-scie pour de telles scies et plus précisément pour des scies utilisées par les bijoutiers qui présentent des dimensions réduites, qu'elles soient plates ou filiformes.

Le porte-scie selon la présente invention est caractérisé par le fait que les deux dispositifs sont identiques, que chacun desdits dispositifs comprend un corps muni d'un passage longitudinal dont les dimensions de la section transversale correspondent à la section transversale de la scie permettant le guidage et le centrage de la scie, et que ledit corps comprend une vis de serrage disposée perpendiculairement audit passage permettant de serrer l'extrémité correspondante de ladite scie dans le passage.

L'avantage du porte-scie selon la présente invention est le fait que la lame de la scie est guidée et centrée dans le passage dudit bloc dont les dimensions correspondent bien entendu aux dimensions habituelles de ces scies et lors du serrage il n'y a pratiquement pas de place pour un déplacement de la scie à l'intérieur dudit passage.

Selon une variante d'exécution, le serrage se fait entre les extrémités de deux vis, une qui se trouve d'un côté du passage et l'autre que l'on utilise pour obtenir le serrage ou le desserrage de la lame. Cette manière de faire permet également de modifier la scie pour gauchers et droitiers. En effet, lors de la mise en place de la lame. On doit faire en sorte que la lame soit tendue entre les deux extrémités de l'archet, dans ce but on pousse avec une main ou l'abdomen l'archet contre un obstacle et on serre ou on desserre la vis. Suivant qu'il s'agisse d'un gaucher ou d'un droitier, il faut que la vis de serrage et de desserrage se trouve du bon côté et dans ce cas il suffit d'interchanger la place de la vis fixe avec la vis de serrage munie d'une mollette. Cette modification peut se faire très facilement par les futurs utilisateurs où on peut aussi lors du montage prévoir des porte-scie pour gauchers ou droitiers, sans prévoir une construction spéciale.

Selon une autre variante d'éxécution et dans le but de permettre également un léger déplacement de la scie en dehors du plan de l'archet, ce qui peut faciliter la visibilité de la pièce sur laquelle on travaille, le dispositif de fixation comprend une pièce en T, la tête du T étant perpendiculaire au plan de l'archet et on fixe ledit corps sur le flanc de la jambe du T à gauche ou à droite en fonction qu'on ait à faire à un droitier ou à un gaucher. La fixation se fait par une vis traversant la jambe du pied et aboutissant à l'intérieur du passage. Cette vis et les vis avec mollette assurent la fixation de la lame. En montant au départ le corps d'un côté et de l'autre, nous avons une scie pour droitier ou pour gaucher. Cette variante d'exécution permet également l'utilisation d'une scie dont la longueur est supérieure à la distance entre les extrémités de l'archet.

L'invention vise également à proposer une porte-scie permettant de remplacer facilement les pièces qui seraient défectueuses ou usées. Ainsi, chacune des pièces archet, dispositifs de fixation et poignée sont interchangeables.

Dans le but de contribuer à la légèreté de l'outil, l'archet est fait d'une tube écrasé qui représente une résistance suffisante pour les travaux d'un bijoutier ou similaires.

De même, la poignée est faite en un matériau plastique enrobée d'une mousse, ce qui permet d'éviter le glissement de l'outil lorsqu'on transpire.

L'invention sera décrite plus en détail à l'aide du dessin annexé.

La figure 1 est une vue schématique de côté de l'outil présentant les différents éléments.

Les figures 2, 3 et 4 sont des coupes horizontales du dispositif de fixation des extrémités de la scie.

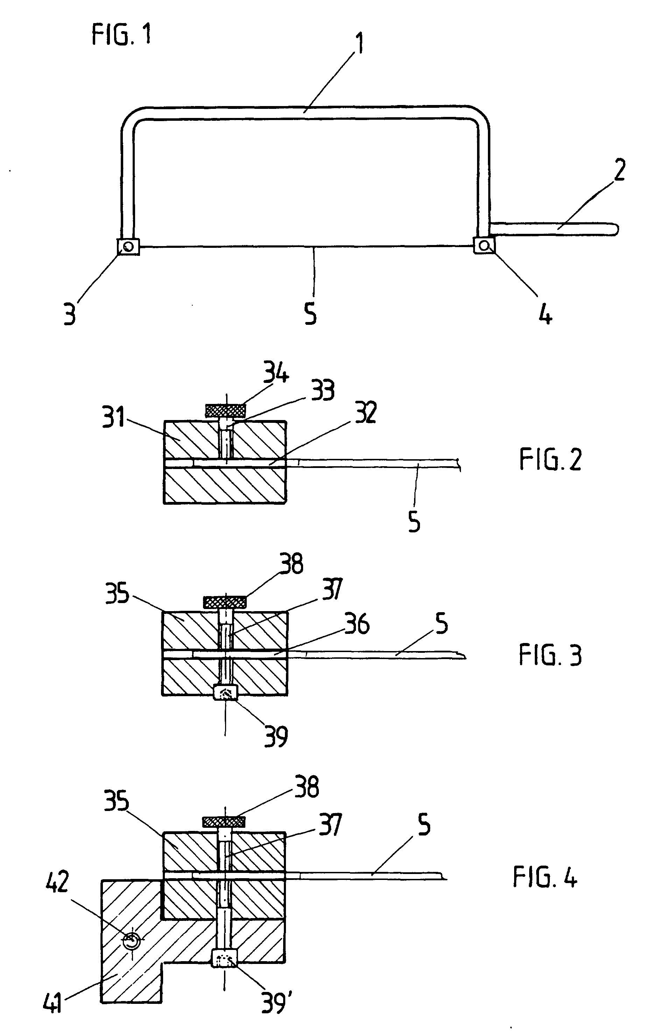

A la figure 1, on a représenté un archet 1 en forme de U muni d'une poignée 2, deux dispositifs 3 et 4 de fixation d'une lame 5. Les cinq éléments précités sont de préférence interchangeables, donc démontables. Par exemple, des vis ou de moyens d'assemblage similaires sont utilisées pour interconnecter ces différents éléments.

A la figure 2, on a représenté la variante la plus simple du dispositif de fixation. Ce dispositif est constitué d'un corps 31 muni d'un passage longitudinal 32 dont les dimensions correspondent aux dimensions de la lame 5 permettant ainsi de guider et de centrer la lame. Une vis 33 munie d'une tête molletée 34 permet une fois que la lame 5 est rentrée dans le passage 32 de la serrer contre la paroi de passage 32 et obtenir ainsi la fixation de la lame. Les dispositifs 3 et 4 sont identiques.

A la figure 3, on a représenté une autre variante d'exécution comprenant un corps 35 traversé également par un passage 36 et muni d'une vis 37 avec une tête molletée 38. Par rapport au corps 31, le corps 35 est muni d'une autre vis 39 se trouvant dans le prolongement de la vis 37. Cette vis a un double but : le premier est de pouvoir assurer le serrage de la lame 36 entre les extrémités des vis 37 et 39 qui peuvent être trempées assurant ainsi un bon serrage et permettant en même temps que le corps 35 soit fait d'un alliage léger qui est un avantage pour le porte-scie. Un second avantage est que l'on peut permuter les vis 39 et 37 pour adapter le porte-scie à un gaucher ou à un droitier.

Enfin, le dispositif de fixation de la figure 4 comprend un corps 35 identique ou quasi identique à celui de la figure 3 muni d'une vis 37 actionnée par une tête molletée 38. La pièce 41 a la forme d'un T et le corps 35 est fixé sur le flanc de la jambe de ladite pièce par une vis 39' plus longue que la vis 39. Cette vis 39' assure la fixation du corps 35 sur cette pièce intermédiaire et également assure comme pour la figure 35, le serrage de la lame de scie entre les deux extrémités des vis 37 et 39'. Dans le cas présent, la pièce 41 est fixée de sorte que la jambe de la pièce 41 se trouve dans le même plan que l'archet 1, ce qui signifie que la lame 5 se trouve excentrée par rapport au plan de l'archet, ce qui peut être un avantage lorsqu'on travaille sur des petites pièces car le plan de travail est complètement dégagé du point de vue visiblité.

D'autre part, cette construction permet également de monter sur le flanc gauche ou droit de la pièce 41 le corps 35 transformant ainsi la scie pour droitier ou gaucher. La pièce 41, comme par ailleurs les pièces 35 de la figure 3 et 31 de la figure 2 sont fixées sur l'archet par exemple au moyen d'une vis 42 qui uniquement représentée sur la figure 4. En plus, cette disposition excentrée permet l'utilisation occasionnelle d'une scie de longueur supérieure à la distance entre une extrémité de l'archet, cette longueur étant habituellement de 130 mm.

Le porte-scie est muni d'une poignée également interchangeable fixée par une vis ou moyen équivalent 2 faite d'une pièce cylindrique en plastique enrobée d'une mousser permettant une bonne tenue du porte-scie.

Les éléments décrits précédemment constituent des variantes d'exécution et d'autres variantes d'exécution pourraient être envisagées.

## Revendications

1. Porte-scie comprenant un archet (1) en forme de U, une poignée (2) et deux dispositifs identiques (3, 4) de fixation de deux extrémités de la scie (5), chacun des deux dispositifs (3, 4) étant solidaire d'une des extrémités de l'archet (1), **caractérisé par le fait que** chacun desdits dispositifs comprend un corps (31, 35) muni d'un passage longitudinal (36) dont les dimensions de la section transversale correspondent à la section transversale de la scie (5) permettant le guidage et le centrage de la scie (5), et que ledit corps (31, 35) comprend une vis (38) de serrage disposée perpendiculairement audit passage (36) permettant de serrer l'extrémité correspondante de ladite scie dans le passage.

2. Porte-scie selon la revendication 1, **caractérisé par le fait que** ledit corps (35) est muni d'une seconde vis (39, 39') située dans le prolongement de la première (38) et aboutissant dans ledit passage (36) de sorte à obtenir le serrage de la scie (5) entre les extrémités de deux vis (38, 39, 39').

3. Porte-scie selon la revendication 1, **caractérisé par le fait que** ledit corps (35) est fixé par une vis (39') sur la jambe d'une pièce (41) en forme de T, la tête du T étant perpendiculaire au plan de l'archet (1), que ladite vis (39') de fixation se trouve dans le prolongement de la vis de serrage (38), son extrémité aboutissant dans ledit passage (36).

4. Porte-scie selon l'une des revendications 2 ou 3, **caractérisé par le fait que** lesdits dispositifs de fixation (3, 4, 31, 35) sont en alliage léger et les vis (38, 39, 39') ont leurs extrémités trempées.

5. Porte-scie selon l'une des revendications 1 à 4, **caractérisé par le fait que** chacune des pièces constituant le porte-scie est interchangeable.

6. Porte-scie selon l'une des revendications 1 à 5, **caractérisé par le fait que** l'archet (1) est fait d'un tube écrasé.

7. Porte-scie selon l'une des revendications 1 à 6, **caractérisé par le fait que** la poignée (2) est en matière plastique entourée d'une mousse.

## Claims

1. Saw blade-holder comprising a U-shaped bow (1), a handle (2) and two identical securing devices (3,4) at the two ends of the saw (5), each of the two devices (3,4) being joined to one of the ends of the bow (1), **characterized by** the fact that each of the said devices comprises a body (31,35) fitted with a longitudinal passage (36), the dimensions of the cross-section of which correspond to the cross-section of the saw (5) enabling the control and centring of the saw (5) and that the afore-mentioned body (31,35) comprises a securing screw (38) fitted perpendicularly to the said passage (36) enabling the tightening of the end corresponding to the afore-mentioned saw on the passage.

2. Saw blade-holder according to claim 1, **characterized by** the fact that the said body (35) is fitted with a second screw (39,39') located on the extension of the first screw (38) and which ends up inside the passage (36) so that the saw (5) can be tightened between the ends of the two screws (38,39,39').

3. Saw blade-holder according to claim 1, **characterized by** the fact that the said body (35) is fitted by a screw (39') on the leg of a T-shaped piece (41), the head of the T being perpendicular to the plane of the bow (1) and that the afore-mentioned screw (39') is located on the extension of the tightening screw (38), its end being situated in the said passage (36).

4. Device according to claim 2, **characterized by** the fact that the said securing devices (3,4,31,35) are constructed from light alloy and the screws (38,39,39') have hardened ends.

5. Device according to claim 1, **characterized by** the fact that each of the pieces which comprise the saw blade-holder are interchangeable.

6. Device according to claim 1, **characterized by** the fact that the bow (1) is constructed from a crushed pipe.

7. Saw blade-holder according to claim 1, **characterized by** the fact that the handle (2) is made of a foam-covered plastic material.

## Patentansprüche

1. Haltevorrichtung für ein Sägeblatt, welche einen U-förmigen Bügel (1), einen Handgriff (2) und zwei gleiche Befestigungsvorrichtungen (3, 4) zur Befestigung der beiden Enden des Sägeblatts (5) aufweist, wobei jede dieser beiden Befestigungsvorrichtungen (3,4) fest an einem der Enden des Bügels (1) angebracht ist, **dadurch gekennzeichnet, dass** jede der erwähnten Befestigungsvorrichtungen (3, 4) einen Körper (31, 35) aufweist, der mit einem Längsdurchlass (36) versehen ist, dessen Querschnittsabmessungen dem Querschnitt des Sägeblatts (5) entsprechen und welcher die Führung und die Zentrierung des Sägeblatts (5) erlaubt, und dass der erwähnte Körper (31, 35) eine Spannschraube (38) aufweist, die senkrecht zum erwähnten Längsdurchlass (36) angeordnet ist und das entsprechende Ende des erwähnten Sägeblatts in dem Durchlass einzuspannen erlaubt.

2. Haltevorrichtung nach Anspruch 1, **dadurch gekennzeichnet, dass** der erwähnte Körper (35) mit einer zweiten Schraube (39, 39') versehen ist, welche in der Verlängerung der ersten Schraube (38) liegt und in dem erwähnten Längsdurchlass (36) mündet, derart, dass das Sägeblatt (5) zwischen den Enden der beiden Schrauben (38, 39, 39') eingespannt werden kann.

3. Haltevorrichtung nach Anspruch 1, **dadurch gekennzeichnet, dass** der erwähnte Körper (35) mit einer Schraube (39') auf dem Schenkel eines T-förmigen Teils (41) befestigt ist, wobei der Kopf des T senkrecht zur Ebene des Bügels (1) orientiert ist, und dass die erwähnte Befestigungsschraube (39') in der Verlängerung der Spannschraube (38) liegt und ihre Ende in dem erwähnten Längsdurchlass mündet.

4. Haltevorrichtung nach einem der Ansprüche 2 oder 3, **dadurch gekennzeichnet, dass** die erwähnten Befestigungsvorrichtungen (3, 4, 31, 35) aus einer Leichtmetall-Legierung bestehen und dass die Schrauben (38, 39, 39') gehärtete Enden haben.

5. Haltevorrichtung nach einem der Ansprüche 1 bis 4, **dadurch gekennzeichnet, dass** jedes der diese Haltevorrichtung bildenden Teile austauschbar ist.

6. Haltevorrichtung nach einem der Ansprüche 1 bis 5, **dadurch gekennzeichnet, dass** der Bügel (1) aus einem flachgedrückten Rohr besteht.

7. Haltevorrichtung nach einem der Ansprüche 1 bis 6, **dadurch gekennzeichnet, dass** der Handgriff (2) aus einem von Schaumstoff umgebenden Kunststoff besteht.
